Europäisches Patentamt

European Patent Office

Office européen des brevets

(19)

(11) EP 1 355 144 A1

## (12) EUROPEAN PATENT APPLICATION
published in accordance with Art. 158(3) EPC

(43) Date of publication:
22.10.2003 Bulletin 2003/43

(21) Application number: 02705213.3

(22) Date of filing: 14.03.2002

(51) Int Cl.⁷: $G01N\ 1/38$, $G01N\ 21/59$

(86) International application number:
PCT/JP02/02450

(87) International publication number:
WO 02/077611 (03.10.2002 Gazette 2002/40)

(84) Designated Contracting States:
AT BE CH CY DE DK ES FI FR GB GR IE IT LI LU
MC NL PT SE TR

(30) Priority: 22.03.2001 JP 2001083410

(71) Applicant: MATSUSHITA ELECTRIC INDUSTRIAL
CO., LTD.
Kadoma-shi, Osaka 571-8501 (JP)

(72) Inventors:
• KAWAMURA, Tatsurou
Kyotanabe-shi, Kyoto 610-0351 (JP)

• KAMEI, Akihito
Yawata-shi, Kyoto 614-8295 (JP)

(74) Representative:
Leson, Thomas Johannes Alois, Dipl.-Ing.
Tiedtke-Bühling-Kinne & Partner GbR,
TBK-Patent,
Bavariaring 4
80336 München (DE)

(54) **SOLUTION AGITATING METHOD AND SAMPLE CELL USING FOR THE METHOD**

(57) Disclosed are a method of stirring a solution which involves injecting a gas into a sample solution in order to perform stirring without using a stirring rod or the like when mixing the sample solution with a reagent solution, as well as a sample cell provided with an inlet for injecting a gas into a sample solution and an apparatus for measuring a concentration of a solution employing the same.

FIG. 1

EP 1 355 144 A1

## Description

Technical Field

The present invention relates to a method of stirring a solution. In particular, the present invention relates to a stirring method for use in measuring a specific component in a sample solution by mixing the sample solution with a reagent solution. The stirring method in accordance with the present invention is of high practical use in that, when applied to a sample cell used in measurement of optical characteristics of a sample solution, it can achieve simplicity, high reliability, compactness, lower price and the like of the sample cell.

Background Art

When the concentration of a sample solution is determined by measuring optical characteristics thereof, a sample cell is employed, which has such a configuration allowing light to propagate through a sample solution held therein. This sample cell is made of glass or the like and has the shape of a rectangular parallelepiped. Additionally, it is provided with a transparent portion at the planes thereof facing each other, so that light can propagate though the sample solution.

In general, this sample cell is open at the top, through which a predetermined amount of a sample solution is supplied by means of a dropper, pipette, syringe or the like. Next, a predetermined amount of a reagent solution is injected, and the sample solution and the reagent solution are uniformly mixed by stirring with a stirring rod or by vibration of the sample cell. Then, the concentration of a specific component is determined by measuring the optical characteristics.

In a method as described above, however, the sample solution and the reagent solution are stirred after they are mixed, so that it is necessary to operate a stirring rod or the like. In such a case, the stirring rod might cause an obstruction to the measurement of a transmitted light or scattered light, or the sample cell has to be removed from the optical system, thereby resulting in a problem that it takes a longer time to start the measurement after the mixing. This undesirably increases the blank time in measurement in the case of measuring a transient phenomenon between the sample solution and reagent solution from immediately after mixing them. This becomes a great problem especially when the reaction rate between the sample solution and reagent solution is high.

Moreover, removal of the sample cell from a measurement optical system causes, for example, a change in the arrangement of the optical system, thereby reducing accuracy in the case of measuring a change in the optical characteristics of the sample solution before and after it is mixed with the reagent solution.

In view of the foregoing problems, it is an object of the present invention to provide a stirring method capable of uniformly mixing a sample solution and a reagent solution easily without using a stirring rod and removing a sample cell, and a sample cell and an apparatus for measuring a solution concentration.

Disclosure of Invention

The present invention relates to a method of stirring a solution, characterized by injecting a gas into a solution to stir the solution.

In the above-mentioned method, it is effective that the volume of the gas injected into the solution is not less than 1/20 of the volume of the solution.

It is also effective that a time during which the gas is injected is within 10 seconds.

Additionally, it is effective that the gas contains no carbon dioxide and/or oxygen. It is effective that the gas is at least one selected from the group consisting of nitrogen, argon and helium.

The present invention further relates to a sample cell having a configuration capable of holding a sample solution whose optical characteristic is to be measured and irradiating the sample solution with light, characterized by comprising a gas inlet for injecting a gas for stirring the sample solution.

In the above-mentioned sample cell, it is effective that the gas inlet is placed at the lowermost portion thereof.

It is also effective that the sample cell comprises, at a top portion thereof, an opening for introducing the sample solution and/or a reagent solution to be mixed with the sample solution.

Further, it is effective that the sample cell comprises a switching valve such that a reagent solution to be mixed with the sample solution, as well as the gas, can be injected from the gas inlet.

Further, it is effective that the sample cell further comprises a reagent inlet for injecting a reagent solution to be mixed with the sample solution.

In the sample cell, it is also effective that the reagent inlet is placed above the gas inlet.

Further, in the sample cell, it is effective that the gas inlet is placed above a region where the light propagates in the sample solution.

Further, in the sample cell, it is effective that when a predetermined amount of the sample solution is held, a distance "h" from a liquid surface of the sample solution to a bottom surface of the sample cell and a bottom surface area "S" of the sample cell satisfy the relational expression (1) in a same system of units:

$$h > S/10 \qquad (1)$$

The present invention also relates to an apparatus for measuring a concentration of a solution, characterized by comprising:

a light source for projecting light to a sample solution;

the above-described sample cell for holding the sample solution;

a photosensor for detecting a light transmitted through the sample solution and/or a scattered light arisen when the light propagates through the sample solution;

introducing means for introducing the sample solution to the sample cell;

reagent solution injecting means for injecting a reagent solution into the sample solution in the sample cell;

gas injecting means for injecting the gas into the sample solution in the sample cell; and

a computer for controlling the introducing means, the reagent solution injecting means and the gas injecting means and for analyzing an optical characteristic of the sample solution based on an output signal from the photosensor.

Brief Description of Drawings

FIG. 1 is a diagram showing a configuration of a sample cell in accordance with the present invention.

FIG. 2 is a top plan view of a skeleton 1 of the sample cell shown in FIG. 1.

FIG. 3 is a graph showing the relationship between the time elapsed after mixing of a reagent solution and the transmitted light intensity.

FIG. 4 is another graph showing the relationship between the time elapsed after mixing of a reagent solution and the transmitted light intensity.

FIG. 5 is a graph showing the relationship between the output signal from a photosensor 8 upon the elapse of 360 seconds after mixing of a reagent solution and the protein concentration of each of sample solutions.

FIG. 6 is a diagram showing a configuration of another sample cell in accordance with the present invention.

FIG. 7 is a top plan view of a skeleton 14 of the sample cell shown in FIG. 6.

FIG. 8 is a diagram showing a configuration of still another sample cell in accordance with the present invention.

FIG. 9 is a top plan view of a skeleton 14 of the sample cell shown in FIG. 8.

FIG. 10 is a graph showing the relationship between the time elapsed after mixing of a reagent solution and the scattered light intensity.

Best Mode for Carrying Out the Invention

In the following, embodiments of the present invention are described in detail by reference to drawings; however, the present invention is not limited thereto.

Embodiment 1

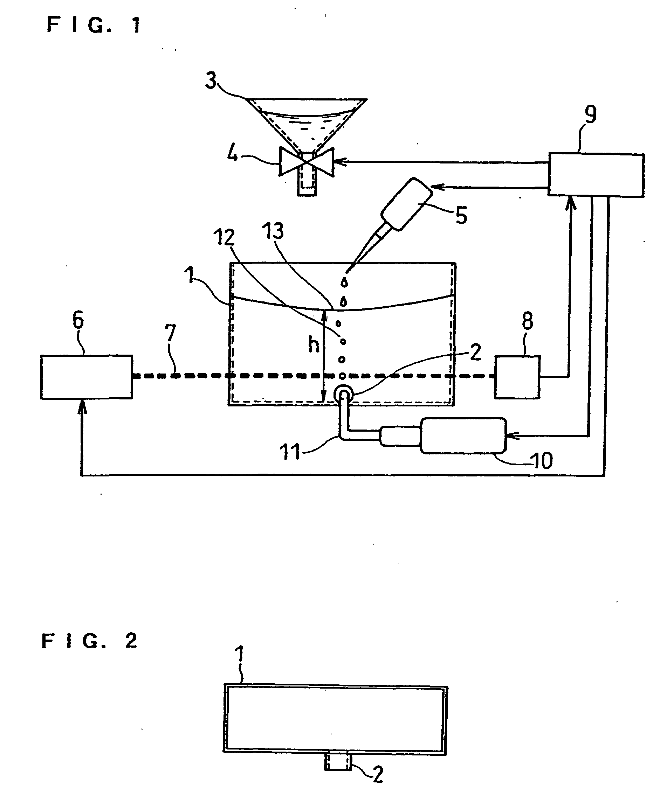

In the following, an embodiment of the present invention is described in detail by reference to FIG. 1.

Referring to FIG. 1, a skeleton 1 of a sample cell in accordance with the present invention comprises a container in the shape of a rectangular parallelepiped which is made of aluminum and has an opening open upwards at the top. Additionally, a glass plate serving as an optical window (not shown) is embedded on both ends of the optical path, so that the sample cell allows light to transmit through a sample solution while holding the sample solution. FIG. 1 is a diagram showing a configuration of a sample cell in accordance with the present invention.

The distance in the major axis direction of this container, that is, the distance between the optical windows is 5 cm. In addition, the distance in the minor axis direction thereof is 1 cm. As shown in FIG. 2, at the lowermost part of the skeleton 1 of the sample cell, an inlet 2 is disposed at the side where no optical window is provided. Herein, FIG. 2 is a top plan view of the skeleton 1 of the sample cell shown in FIG. 1. Practically, the skeleton 1 corresponds to the sample cell.

Further, the sample cell in accordance with the present invention comprises a funnel 3 for temporarily trapping a sample solution, an electromagnetic valve 4 for controlling dropping of the sample solution trapped in the funnel 3 into the sample cell, a pipette 5 for dropping a predetermined amount of a reagent solution into the sample solution and a semiconductor laser module 6 which is a light source. The semiconductor laser module 6 projects a substantially parallel light 7 having a wavelength of 780 nm, strength of 3.0 mW and a beam diameter of 2.0 mm. The optical axis of this substantially parallel light 7 is in parallel with the bottom surface of the skeleton 1 of the sample cell, and is located at a distance of 4 mm from the bottom surface. The inlet 2 has an inside diameter (diameter) of 2.0 mm, and is placed below the substantially parallel light 7, as shown in FIG. 1.

Further, the sample cell in accordance with the present invention comprises a photosensor 8 for detecting a light transmitted through the sample solution and a computer 9 for analyzing the output signal from the photosensor 8 and for controlling the electromagnetic valve 4, pipette 5 and light source 6.

In addition, a pump 10 injects air from the inlet 2 into the sample solution, through a tube 11. This pump 10 is controlled by the computer 9. Herein, FIG. 1 schematically illustrates bubbles 12, which are generated when air is injected from the inlet 2.

The lowermost part of a liquid surface 13 of the sample solution is located at a height of "h" from the bottom surface of the skeleton 1 of the sample cell. This skeleton 1 of the sample cell has radius corners at the corners on the inner wall thereof. In other words, the corners are not strictly right-angled, so that the "h" is 1 cm when 5 ml of the sample solution is held.

The following shows an example in which pure water is used as a sample solution and a dispersion prepared by uniformly dispersing polystyrene particles having a mean particle diameter of 20 nm in pure water, is used as a reagent solution.

The polystyrene particles have a specific gravity close to that of pure water, and also have a small particle size. Accordingly, a phenomenon such as precipitation is not observed in the measurement time described in the present invention. Dropping this reagent solution into the sample solution (pure water) causes the particles to be diffused into the sample solution, thereby opacifying the entire sample solution. The degree of this opacity, i.e., the turbidity, is measured as a transmitted light intensity based on the output signal from the photosensor 8.

As such, opacifying of a solution containing fine particles caused by diffusion is not accompanied by any chemical reaction. Therefore, the turbidity of the entire sample solution solely depends on the degree of diffusion of the reagent solution, so that it is not necessary to take the reaction rate into consideration. In other words, the fact that the turbidity has stabilized at a certain value means that the fine particles have been sufficiently diffused and thus uniformly dispersed in the entire solution. Because of the foregoing, when confirming a stirring effect, it is convenient to mix with the sample solution, a dispersion containing fine particles as a reagent solution to measure the turbidity.

According to this embodiment, a method of the present invention was performed as follows.

First, pure water containing no fine particles such as dusts was charged as a sample solution into the funnel 3 for trapping, and then the computer 9 controlled the electromagnetic valve 4 to introduce the sample solution trapped in the funnel 3 into the sample cell. Herein, the predetermined amount of the sample solution to be introduced was 4.5 ml, and the "h" was less than 10 mm. Then, the computer 9 controlled the pipette 5 to drop 0.5 ml of the above-described reagent solution into the skeleton 1 of the sample cell, thereby mixing it with the sample solution. As a result, 5 ml of fluid was held in the sample cell, and the "h" became 10 mm.

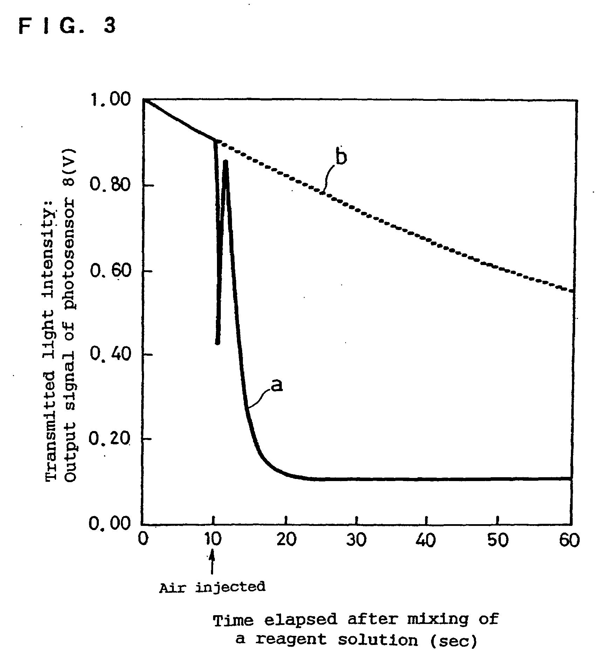

At the same time, the computer 9 started recording the output signal from the photosensor 8. The change with time of the output signal from the photosensor 8 was shown in FIG. 3. The relationship between the time elapsed after mixing of the reagent solution and the output signal (transmitted light intensity) from the photosensor 8 was denoted in the graph of FIG. 3. Upon the elapse of 10 seconds after mixing of the reagent solution, the computer 9 controlled the pump 10 to inject 5 ml of air from the inlet 2 in two seconds. The output signal from the photosensor 8 in the case of injecting air in this manner were denoted by the solid line "a" in FIG. 3.

Then, in the case of measuring the concentration of a specific component in the sample solution, the computer 9 analyzed the output signal from the photosensor 8 obtained after mixing of the reagent solution, denoted by this solid line, to calculate the concentration of the sample solution. This solid line significantly changed at around the time of injecting air, that is, upon the elapse of 10 seconds after mixing of the reagent solution. The reason was that the injected air entered the optical path of the substantially parallel light 7, thereby obstructing the optical path.

Additionally, the output signal from the photosensor 8 in the case of not injecting air in the above-described manner was denoted by the dotted line "b" in FIG. 3. This dotted line overlapped the solid line until 10 seconds had elapsed after mixing of the reagent solution; however, after the elapse of 10 seconds, the decreasing rate of the output signal from the photosensor 8 shown by the dotted line was lower than that shown by the solid line. This was because there was no stirring action caused by injection of air and thus the fine particles were spread only by diffusion action. Accordingly, as shown in FIG. 3, the output signal from the photosensor 8 was approximately 0.55 V upon the elapse of 60 seconds after mixing of the reagent solution, and the signal did not stabilize, continuing to decrease further.

On the other hand, in the case of injecting air, shown by the solid line, the output signal from the photosensor 8 was approximately 0.11 V upon the elapse of 60 seconds, and the signal decrease was saturated, indicating that the sample solution had sufficiently stabilized. Similarly, in the case of sufficiently stirring with a stirring rod or the like, the output signal from the photosensor 8 stabilized at approximately 0.11 V. In other words, by injecting air to perform stirring as in this embodiment, it was possible to achieve a stirring effect equivalent to that obtained in the case of sufficiently stirring with a stirring rod or the like.

It should be noted that, although 5 ml of air was injected in two seconds in the cases described above, a similar stirring effect was achieved when air was injected in a volume of not less than 1/20 of that of the sample solution, i.e., not less than 0.25 ml, within 10 seconds, and a greater stirring effect was achieved by injecting a larger amount of air in a shorter time.

Herein, when the amount of the injected air was less than 1/20 of the amount of the sample solution, a sufficient stirring effect was not achieved. Also, when air was injected in a time longer than 10 seconds, a sufficient stirring effect was not achieved even if the amount of the injected air was more than 1/20 of the amount of the solution.

Additionally, the larger the amount of the injected gas, the greater the stirring effect obtained, as long as the amount was such that a decrease in the amount of the sample solution due to vaporization of the sample solution did not present a practical problem.

Further, the bottom surface area S of the skeleton 1 of the sample cell was 5 cm$^2$ (1 cm × 5 cm), and the distance "h" from the bottom surface to the lowermost part of the liquid surface of the sample solution was 1 cm. When compared in a same system of units, i.e., the centimeter system, it is preferable that the bottom surface area "S" and the distance "h" satisfy the relational expression (1):

$$h = 1 > S/10 = 0.5 \qquad (1)$$

Herein, when the bottom surface area "S" relative to the distance "h" was greater than that shown above and thus the expression (1) was not satisfied, a sufficient stirring effect could not be achieved.

Further, in this embodiment, the inlet 2 was placed at a position in contact with the bottom surface of the skeleton 1 of the sample cell, as shown in FIG. 1. This made it possible to utilize the nature of bubbles to move upwards, thereby improving the stirring efficiency.

The above-described insufficient stirring effect means that fine particles were not uniformly mixed and thus no substantial stirring effect was obtained as compared with the case where only dropping was performed. For example, it means that fine particles were not uniformly mixed and thus the output signal of the photosensor 8 did not stabilize at a predetermined value upon the elapse of 60 seconds after mixing of the reagent solution, as shown in this embodiment.

As described above, according to this embodiment, it is possible to stir a solution without using a stirring rod and removing a sample cell from an optical system. This can simplify the measurement steps and prevent malfunction from occurring, thereby providing an extremely great practical effect and realizing a greater efficiency and laborsaving of a measurement and a test.

Embodiment 2

In this embodiment, an example is shown, in which the protein concentration in a sample solution is measured using a sample cell having the configuration shown in FIG. 1 of Embodiment 1 and a sulfosalicylic acid reagent solution (reagent prepared by dissolving sodium sulfate in 2-hydroxy-5-sulfobenzoic acid aqueous solution) as a reagent solution.

In this case, mixing the sample solution with the sulfosalicylic acid reagent solution causes protein components in the sample solution to be agglomerated, thereby opacifying the entire sample solution; therefore, the protein concentration is determined by measuring the degree of this opacity, that is, the turbidity. Herein, the turbidity is measured as a transmitted light intensity, i.e., an output signal from the photosensor 8. The higher the protein concentration, the higher the turbidity and therefore the smaller the output signal of the photosensor 8 becomes. Unlike Embodiment 1, in this embodiment, the generation rate of turbidity, i.e., the rate of change of the output signal from the photosensor 8 is influenced not only by the diffusion state of the reagent solution, but also by the agglomeration rate.

According to this embodiment, a method of the present invention was performed as follows.

First, an aqueous solution having a protein concentration of 100 mg/dl was charged as a sample solution into the funnel 3 for trapping, and then the computer 9 controlled the electromagnetic valve 4 to introduce the sample solution trapped in the funnel 3 into the skeleton 1 of the sample cell. Herein, the amount of the injected sample solution was 4.5 ml, and the "h" was less than 10 mm. Then, the computer 9 controlled the pipette 5 to drop 0.5 ml of the sulfosalicylic acid reagent solution into the skeleton 1 of the sample cell, thereby mixing it with the sample solution. As a result, 5 ml of fluid was held in the sample cell, and the "h" became 10 mm.

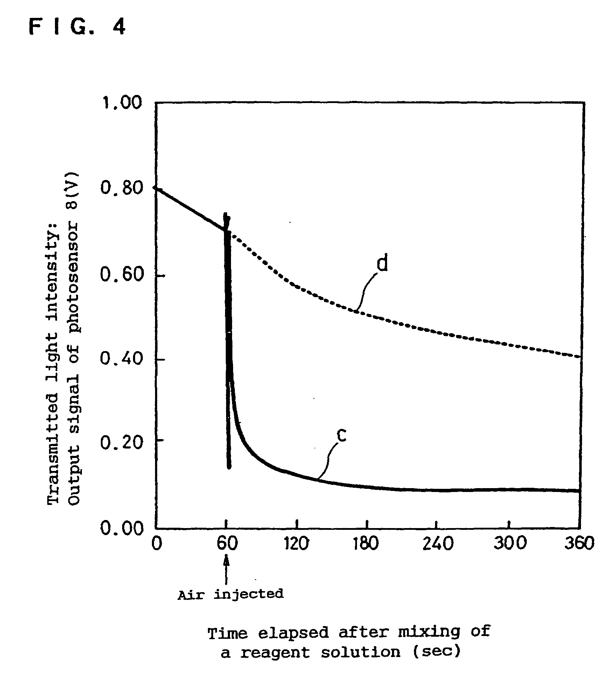

At the same time, the computer 9 started recording the output signal from the photosensor 8. The change with time of the output signal from the photosensor 8 was shown in FIG. 4. The relationship between the time elapsed after mixing of the reagent solution and the output signal from the photosensor 8 (transmitted light intensity) was denoted in the graph of FIG. 4. Upon the elapse of 60 seconds after mixing of the reagent solution, the computer 9 controlled the pump 10 to inject 5 ml of air from the inlet 2 in two seconds. The output signal from the photosensor 8 in the case of injecting air in this manner were denoted by the solid line "c" in FIG. 4.

Then, in the case of measuring the concentration of a specific component in the sample solution, the computer 9 analyzed the output signal from the photosensor 8 obtained after mixing of the reagent solution, denoted by this solid line, to calculate the concentration of the sample solution. This solid line significantly changed at around the time of injecting air, that is, upon the elapse of 60 seconds after mixing of the reagent solution, and the reason was that the injected air entered the optical path of the substantially parallel light 7, thereby obstructing the optical path.

Additionally, the output signal from the photosensor 8 in the case of not injecting air in the above-described manner were denoted by the dotted line "d" in FIG. 4. This dotted line overlapped the solid line until 60 seconds had elapsed after mixing of the reagent solution; however, after the elapse of 60 seconds, the decreasing rate of the output signal from the photosensor 8 shown by the dotted line was lower than that shown by the solid line. This was because there was no stirring action by injection of air. Accordingly, as shown in FIG. 4, the output signal from the photosensor 8 was approximately 0.4 V upon the elapse of 360 seconds after mixing of the reagent solution, and the signal did not stabilize, continuing to decrease further. On the other hand, in the case of injecting air, shown by the solid line, the output signal from the photosensor 8 was approximately 0.1 V upon the elapse of 360 seconds, and the signal decrease was saturated, so that the signal had sufficiently stabilized. When the above-mentioned sample solution having a protein concentration of 100 mg/dl was used, the output signal from the photosensor 8 stabilized at approximately 0.1 V, even in the case of sufficiently stirring with a stirring rod or the like.

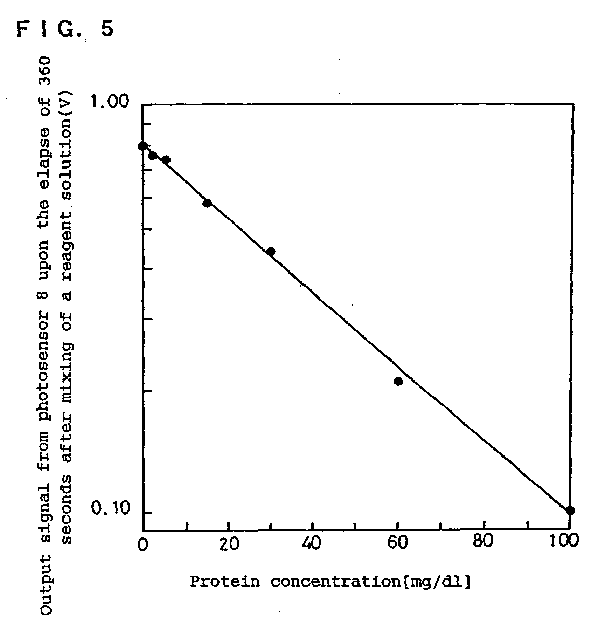

Further, a similar measurement was performed using aqueous solutions having respective protein concentrations of 0 mg/dl, 2.5 mg/dl, 5 mg/dl, 15 mg/dl, 30 mg/dl and 60 mg/dl as sample solutions. For each of these sample solutions, the relationship between the output signal of the photosensor 8 upon the elapse of 360 seconds after mixing of the reagent solution and the protein concentration was shown in FIG 5. As shown in the solid line in FIG. 5, a straight line could be drawn by connecting the respective points, and it was possible to measure the protein concentration with high accuracy by using this straight line as a calibration line. The accuracy of this measurement was nearly equal to that in the case of sufficiently stirring with a stirring rod or the like. In the case of not injecting air, the respective points were not on a straight line, and the reproducibility and accuracy of the measurement were low.

By injecting air to perform stirring as in this embodiment, it is possible to achieve a stirring effect equivalent to that obtained in the case of sufficiently stirring with a stirring rod or the like, thereby realizing a highly accurate measurement.

Embodiment 3

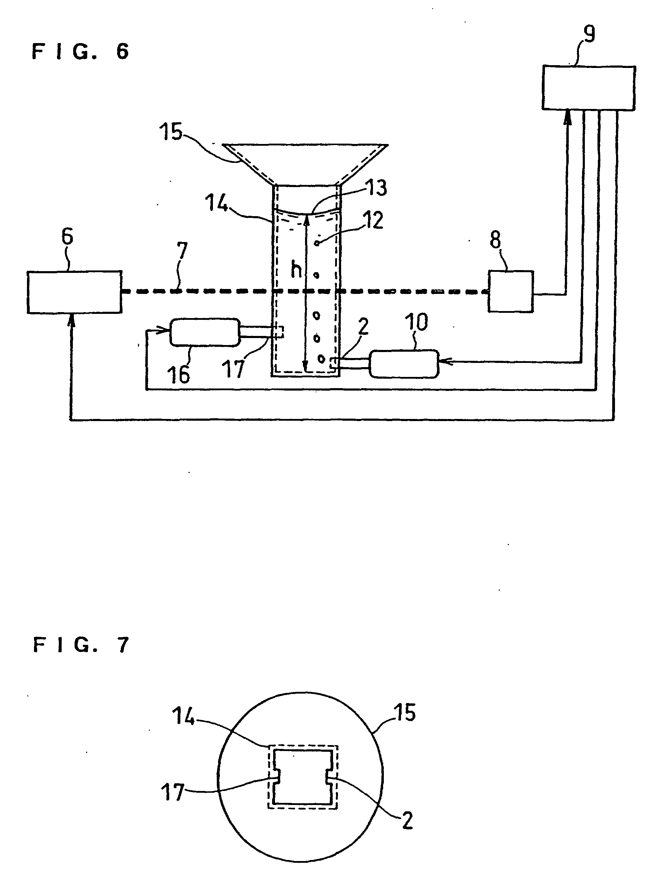

In Embodiment 3, a detailed description is made for the case of using the sample cell shown in FIG. 6. Herein, FIG. 7 is a schematic top plan view of a skeleton 14 of the sample cell shown in FIG. 6.

Numerals 2, 6, 7, 8, 9, 10, 12 and 13 in FIG. 6 denote the same elements denoted by numerals 2, 6, 7, 8, 9, 10, 12 and 13 in FIG. 1 of Embodiment 1.

The skeleton 14 of the sample cell in accordance with the present invention shown in FIG. 6 is a container in the shape of a rectangular parallelepiped which is made of aluminum and has a funnel-like opening 15 open upwards at the top, and a glass plate serving as an optical window (not shown) is embedded on both ends of the optical path, so that the sample cell allows light to transmit through a sample solution while holding the sample solution.

For example, the distance in the propagation direction of light of this container, that is, the distance between the optical windows is 10 mm, and the distance in a direction perpendicular to the above-mentioned propagation direction is 10 mm. As in FIG. 1, an inlet 2 is disposed in contact with the bottom surface of the skeleton 14 of the sample cell.

Additionally, in the sample cell shown in FIG. 6, a pipette 16 for injecting a predetermined amount of reagent solution through an inlet 17 into the skeleton 14 of the sample cell, is controlled by a computer 9. The inlet 17 has an inside diameter (diameter) of 2 mm, and the pipette 16 is placed above the inlet 2 and below the substantially parallel light 7, as shown in the figure. Herein, FIG. 7 is a top plan view of the skeleton 14 of the sample cell shown in FIG. 6.

According to this embodiment, a method of the present invention was performed as follows.

In this embodiment, an aqueous solution of an albumin was used as a sample solution, and an aqueous solution containing a polyclonal antibody capable of binding to the albumin was used as a reagent solution. Mixing the above-described sample solution and reagent solution caused albumin molecules to be agglomerated via the antibody, thereby opacifying the entire solution. The albumin concentration could be determined by measuring the degree of this opacify based on the transmitted light.

In the sample cell shown in FIG. 6, it was possible to determine the albumin concentration based on the output signal from the photosensor 8. Specifically, the higher the albumin concentration, the smaller the output signal from the photosensor 8 became.

First, 1.5 ml of a sample solution having an albumin concentration of 1.0 mg/dl was charged through the opening 15 into the sample cell. Next, the computer 9 controlled the pipette 16 to inject 1.5 ml of the reagent solution into the skeleton 14 of the sample cell. Consequently, 3 ml of solution was held in the skeleton 14 of the sample cell, and at this time, the distance "h" from the bottom surface to the lowermost portion of the liquid surface was 3 cm in the skeleton 14 of the sample cell.

At the same time when the reagent solution was injected, the computer 9 started recording the output signal from the photosensor 8. Upon the elapse of 60 seconds after mixing of the reagent solution, the computer 9 controlled the pump 10 to inject 0.15 ml of nitrogen from the inlet 2 in five seconds. As was the case with the solid line in FIG. 4, the output signal from the photosensor 8 in the case of injecting nitrogen in this manner sufficiently stabilized upon the elapse of 360 seconds after injection of the reagent solution, so that a stirring effect could be confirmed. Based on the stabilized output signal from the photosensor 8, it was possible to determine the albumin concentration.

On the other hand, as was the case with the dotted line in FIG. 3, the output signal in the case of not injecting nitrogen did not stabilize even upon the elapse of 360 seconds after injection of the reagent solution, continuing to decrease further. From the above, it was shown that a clear stirring effect could be obtained by injecting nitrogen.

It should be noted that the inlet 17 for reagent solution was placed above the inlet 2 for nitrogen in this embodiment, and this placement achieved the following effects. Since bubbles of nitrogen had a specific gravity sufficiently lower than that of the sample solution, buoyancy caused them to move upward from the point of injection. Further, although the injected reagent solution remained in the vicinity of the inlet 17, placing the inlet for nitrogen below the inlet 17 allowed the nitrogen bubbles being rising by buoyancy to pass through the area where the reagent solution remained, thereby increasing the stirring effect.

Additionally, nitrogen, in place of air, was injected as a gas in this embodiment, in contrast with Embodiments 1 and 2. Unlike the case of injecting air where dissolution of carbon dioxide in the solution changed the pH of the entire solution to alter the characteristics of the antigen-antibody reaction, injecting nitrogen in the above-described manner caused no decrease in accuracy when measuring the concentration.

Moreover, it also caused no decrease in accuracy of the turbidity measurement, which could have been resulted from opacifying of the entire solution due to the generation of carbonate by dissolution of carbon dioxide in the solution and the subsequent precipitation thereof. Furthermore, unlike the case of injecting air, it did not cause any change in optical characteristics, such as a decrease in fluorescence yield due to an increase in concentration of the residual oxide by dissolution of oxide in the solution. It should be noted that a similar effect was obtained with argon and helium, besides nitrogen. A similar effect was also achieved by a mixed gas of these.

As described above, according to this embodiment, it is possible to stir a solution without using a stirring rod and removing a sample cell from an optical system. Furthermore, there is no change occurred in the pH, residual oxide concentration and the like of the sample solution, with no generation of turbidity not attributed to a specific substance to be measured; accordingly, it is possible to realize a highly accurate measurement, thereby providing an extremely great practical effect and achieving a greater efficiency and laborsaving of a measurement and a test.

Embodiment 4

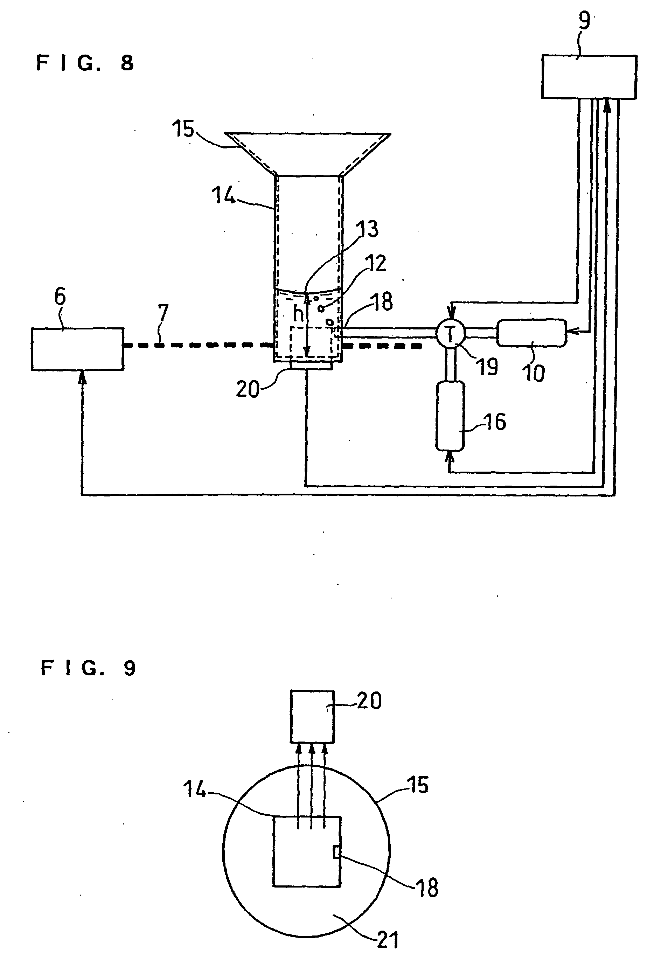

In the following, Embodiment 4 in accordance with the present invention is described in detail by reference to FIG. 8.

Numerals 6, 7, 9, 10, 12, 13, 14, 15 and 16 in FIG. 8 denote the same elements denoted by numerals 6, 7, 9, 10, 12, 13, 14, 15 and 16 in FIG. 6 of Embodiment 3.

In the sample cell shown in FIG. 8, an inlet 18 for gas and reagent solution is located above a substantially parallel light 7, and the inside diameter (diameter) thereof is 2 mm. A computer 9 controls a switching valve 19 so as to connect a pump 10 to the inlet 18 when supplying a gas, and to connect a pipette 16 to the inlet 18 when supplying a reagent solution. A photosensor 20 detects a scattered light 21 arisen when the substantially parallel light 7 propagates through the sample solution. As shown in FIG. 9, the photosensor 20 detects mainly a scattered light propagating in a direction perpendicular to the propagation direction of the substantially parallel light 7. Herein, FIG. 9 is a top plan view of a skeleton 14 of the sample cell shown in FIG. 8.

According to this embodiment, a method of the present invention was performed as follows.

In this embodiment, as in embodiment 3, an aqueous solution of an albumin was used as a sample solution, and an aqueous solution containing a polyclonal antibody capable of binding to the albumin was used as a reagent solution. Mixing the above-described sample solution and reagent solution caused albumin molecules to be agglomerated via the antibody, thereby opacifying the entire solution. The albumin concentration could be determined by measuring the degree this opacity based on the scattered light.

In the sample cell shown in FIG. 8, it was possible to determine the albumin concentration based on the output signal from the photosensor 20. Specifically, the higher the albumin concentration, the greater the output signal from the photosensor 20 became.

First, 1.0 ml of a sample solution having an albumin concentration of 1.0 mg/dl was charged through an opening 15 into the sample cell. Next, the computer 9 controlled the pipette 16 and the switching valve 19 to inject 1.0 ml of a reagent solution from the inlet 18 into the skeleton 14 of the sample cell. Consequently, 2 ml of solution was held in the skeleton 14 of the sample cell, and at this time, the distance "h" from the bottom surface to the lowermost portion of the liquid surface was 2 cm in the skeleton 14 of the sample cell. At the same time when the reagent solution was injected, the computer 9 started recording the output signal from the photosensor 20.

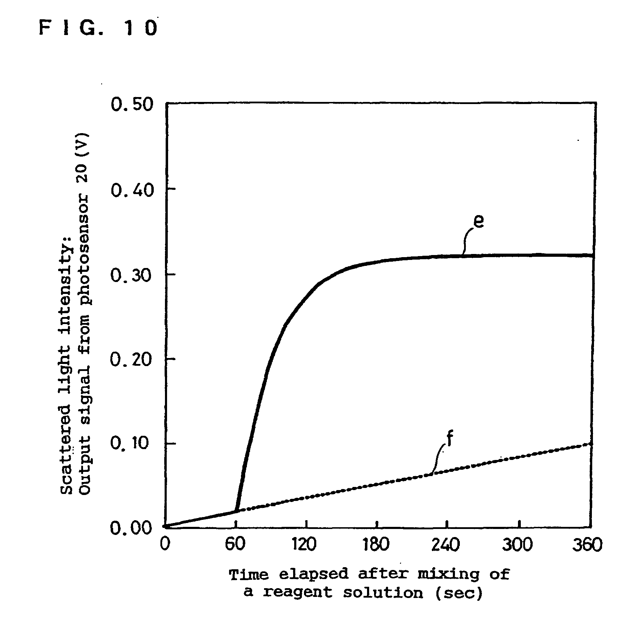

The output signal from the photosensor 20 is shown in FIG. 10. FIG. 10 is a graph showing the relationship between the time elapsed after mixing of the reagent solution and the output signal from the photosensor 20 (scattered light intensity). Upon the elapse of 60 seconds after mixing of the reagent solution, the computer 9 controlled the pump 10 and the switching valve 19 to inject 0.15 ml of nitrogen from the inlet 18 in five seconds. The output signal from the photosensor 20 in the case of injecting nitrogen in this manner was denoted by the solid line "e" in FIG. 10. As was the case with the solid line "c" in FIG. 4, the output-signal sufficiently stabilized upon the elapse of 360 seconds after injection of the reagent solution, so that a stirring effect could be confirmed. The albumin concentration was determined based on this stabilized output signal from the photosensor 20.

Meanwhile, the result obtained in the case of not injecting nitrogen is denoted by the dotted line "f" in FIG. 10. As was the case with the dotted line "d" in FIG. 4, the output signal did not stabilize even upon the elapse of 360 seconds after injection of the reagent solution, continuing to decrease further. Herein, this dotted line overlapped the solid line until 60 seconds had elapsed after mixing of the reagent solution. By injecting nitrogen in the above-described manner, it was possible to uniformly mix the sample solution and reagent solution, thereby promoting the antigen-antibody reaction. From the above, it was shown that a clear stirring effect could be obtained by injecting nitrogen.

It should be noted that the inlet 18 for reagent solution was placed above the substantially parallel light 7 in this embodiment, and this placement achieved the following effect.

Specifically, since bubbles of nitrogen had a specific gravity sufficiently lower than that of the solution, buoyancy caused them to move upward from the point of injection. Accordingly, placing the inlet 18 above the substantially parallel light 7 prevented the bubbles from entering the optical path of the substantially parallel light 7, thereby causing no obstruction to the measurement of the scattered light.

Further, no significant change in the output signal from the photosensor, caused by the gas bubbles obstructing the optical path, was observed at time points of injecting the gas, such as those shown in FIGS. 3 and 4 (upon the elapse of 10 seconds and 60 seconds after mixing of the reagent solution, respectively). This showed that the above-described placement had shorten a time during which it was impossible to conduct measurement when continuously measuring a transient phenomenon in a reaction, and thus was advantageous.

Moreover, using the inlet for reagent solution also as the inlet for gas provided the following stirring effect. Although the injected reagent solution remained in the vicinity of the inlet 18, nitrogen was supplied from this inlet to allow the bubbles to pass through the area where the reagent solution remained, thereby increasing the stirring effect. Additionally, the amount, space and the like of the sample solution could be made smaller in this embodiment, as compared with those in Embodiment 3 in which separate inlets were provided for the gas and the reagent solution.

As described above, according to this embodiment, it is possible to stir a solution without using a stirring rod and removing a sample cell from an optical system. This is particularly advantageous when continuously measuring a reaction between a specific substance and a reagent solution. Further, it is possible to reduce the volume and size of a sample cell, thereby providing an extremely great practical effect.

Industrial Applicability

As described above, the present invention eliminates the need for stirring with a stirring rod or the like, thereby providing a great practical effect and realizing a greater efficiency and laborsaving of a measurement and a test. Moreover, the present invention provides an extremely practical effect because it makes it possible to continuously measure a reaction between a specific component and a reagent solution in a sample solution. Accordingly, the method of stirring a solution and sample cell in accordance with the present invention can be effectively employed, for example, in a test which requires mixing and stirring of a solution with a reagent and the like.

**Claims**

1. A method of stirring a solution, **characterized by** injecting a gas into a solution to stir said solution.

2. The method of stirring a solution in accordance with claim 1, **characterized in that** the volume of said gas injected into said solution is not less than 1/20 of the volume of said solution.

3. The method of stirring a solution in accordance with claim 1, **characterized in that** a time during which said gas is injected is within 10 seconds.

4. The method of stirring a solution in accordance with claim 1, **characterized in that** said gas contains no carbon dioxide and/or oxygen.

5. The method of stirring a solution in accordance with claim 1, **characterized in that** said gas is at least one selected from the group consisting of nitrogen, argon and helium.

6. A sample cell having a configuration capable of holding a sample solution whose optical characteristic is to be measured and irradiating said sample solution with light, **characterized by** comprising a gas inlet for injecting a gas for stirring said sample solution.

7. The sample cell in accordance with claim 6, **characterized in that** said gas inlet is placed at the lowermost portion thereof.

8. The sample cell in accordance with claim 6, **characterized by** comprising, at a top portion thereof, an opening for introducing said sample solution and/or a reagent solution to be mixed with said sample solution.

9. The sample cell in accordance with claim 6, **characterized by** comprising a switching valve such that said reagent solution to be mixed with said sample solution, as well as said gas, can be injected from said gas inlet.

10. The sample cell in accordance with claim 6, **characterized by** further comprising a reagent inlet for injecting a reagent solution to be mixed with said sample solution.

**11.** The sample cell in accordance with claim 10, **characterized in that** said reagent inlet is placed above said gas inlet.

**12.** The sample cell in accordance with claim 6, **characterized in that** said gas inlet is placed above a region where said light propagates in said sample solution.

**13.** The sample cell in accordance with claim 6, **characterized in that**, when a predetermined amount of said sample solution is held, a distance "h" from a liquid surface of said sample solution to a bottom surface of said sample cell and a bottom surface area "S" of said sample cell satisfy the relational expression (1) in a same system of units:

$$h > S/10 \qquad (1)$$

**14.** An apparatus for measuring a concentration of a solution, **characterized by** comprising:

a light source for projecting light to a sample solution;
said sample cell in accordance with any one of claims 6 to 13 for holding said sample solution;
a photosensor for detecting a light transmitted through said sample solution and/or a scattered light arisen when said light propagates through said sample solution;
introducing means for introducing said sample solution to said sample cell;
reagent solution injecting means for injecting a reagent solution into said sample solution in said sample cell;
gas injecting means for injecting said gas into said sample solution in said sample cell; and
a computer for controlling said introducing means, said reagent solution injecting means and said gas injecting means and for analyzing an optical characteristic of said sample solution based on an output signal from said photosensor.

**Amended claims under Art. 19.1 PCT**

**1.** (amended). A method of stirring a solution, **characterized by** injecting a gas into a solution to stir said solution, the volume of said gas injected into said solution being not less than 1/20 of the volume of said solution.

**2.** (cancelled).

**3.** The method of stirring a solution in accordance with claim 1, **characterized in that** a time during which said gas is injected is within 10 seconds.

**4.** The method of stirring a solution in accordance with claim 1, **characterized in that** said gas contains no carbon dioxide and/or oxygen.

**5.** The method of stirring a solution in accordance with claim 1, **characterized in that** said gas is at least one selected from the group consisting of nitrogen, argon and helium.

**6.** A sample cell having a configuration capable of holding a sample solution whose optical characteristic is to be measured and irradiating said sample solution with light, **characterized by** comprising a gas inlet for injecting a gas for stirring said sample solution.

**7.** The sample cell in accordance with claim 6, **characterized in that** said gas inlet is placed at the lowermost portion thereof.

**8.** The sample cell in accordance with claim 6,

F I G. 1

F I G. 2

F I G. 3

Air injected

Time elapsed after mixing of
a reagent solution (sec)

# F I G. 4

Time elapsed after mixing of
a reagent solution (sec)

EP 1 355 144 A1

# F I G. 5

Output signal from photosensor 8 upon the elapse of 360 seconds after mixing of a reagent solution(V)

Protein concentration[mg/dl]

FIG. 6

FIG. 7

F I G. 8

F I G. 9

FIG. 10

<br>

<p style="text-align:center"><strong>INTERNATIONAL SEARCH REPORT</strong></p>

| International application No. |
|---|
| PCT/JP02/02450 |

**A.  CLASSIFICATION OF SUBJECT MATTER**
Int.Cl⁷ G01N1/38, G01N21/59, G01N21/59

According to International Patent Classification (IPC) or to both national classification and IPC

**B.  FIELDS SEARCHED**

Minimum documentation searched (classification system followed by classification symbols)
Int.Cl⁷ G01N1/00-1/44, G01N21/00-21/958

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)
JICST FILE(JOIS)

**C.  DOCUMENTS CONSIDERED TO BE RELEVANT**

| Category* | Citation of document, with indication, where appropriate, of the relevant passages | Relevant to claim No. |
|---|---|---|
| X<br>A | JP 11-190696 A  (Denki Kagaku Keiki Kabushiki Kaisha),<br>13 July, 1999 (13.07.99),<br>Full text; Figs. 1 to 9<br>(Family: none) | 1,6-8,10,<br>11,14<br>2,3,12 |
| X<br>A | US 4397684 A  (Institut de Recherches de la Siderurgie Francaise Irsid),<br>09 August, 1983 (09.08.83),<br>Full text; Fig. 1<br>& JP 57-161019 A<br>Full text<br>& FR 2501722 A          & EP 62548 A | 1,4,5<br>9 |

☒ Further documents are listed in the continuation of Box C.   ☐ See patent family annex.

| | |
|---|---|
| *      Special categories of cited documents:<br>"A"   document defining the general state of the art which is not considered to be of particular relevance<br>"E"   earlier document but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>    11 June, 2002 (11.06.02) | Date of mailing of the international search report<br>    25 June, 2002 (25.06.02) |
| Name and mailing address of the ISA/<br>    Japanese Patent Office | Authorized officer |
| Facsimile No. | Telephone No. |

Form PCT/ISA/210 (second sheet) (July 1998)

<p style="text-align:center">17</p>

## INTERNATIONAL SEARCH REPORT

| | International application No. |
|---|---|
| | PCT/JP02/02450 |

**C (Continuation).   DOCUMENTS CONSIDERED TO BE RELEVANT**

| Category* | Citation of document, with indication, where appropriate, of the relevant passages | Relevant to claim No. |
|---|---|---|
| X | JP 10-221229 A  (Nikkiso Co., Ltd.),<br>21 August, 1998 (21.08.98),<br>Full text; Figs. 1 to 15<br>(Family: none) | 1,6,7 |
| A | JP 3058876 B2  (Manabu IGUCHI, Yasushi SASAKI),<br>21 April, 2000 (21.04.00),<br>Full text; Figs. 1 to 4<br>& JP 11-171430 A<br>Full text; Figs. 1 to 4 | 13 |

Form PCT/ISA/210 (continuation of second sheet) (July 1998)